# FASCICULE DE BREVET EUROPEEN

(11) **EP 3 374 111 B1**
(45) Date de publication et mention de la délivrance du brevet: **03.03.2021**
(21) Numéro de dépôt: 16798446.7
(22) Date de dépôt: 14.11.2016
(51) Int. Cl.: B23Q 5/32

(54) **MACHINE PORTATIVE POLYVALENTE MODULAIRE ET PROCÉDÉ DE VERROUILLAGE ET DE DÉVERROUILLAGE D'UN MODULE AMOVIBLE**
TRAGBARE MODULARE MEHRZWECKMASCHINE UND VERFAHREN ZUM VERRIEGELN UND ENTRIEGELN EINES ABNEHMBAREN MODULS
PORTABLE MULTI-PURPOSE MODULAR MACHINE AND METHOD FOR LOCKING AND UNLOCKING A REMOVABLE MODULE

(30) Priorité: 13.11.2015 FR 1560898
(43) Date de publication de la demande: 19.09.2018
(73) Titulaire: Fives Machining, 46400 Saint-Laurent-les-Tours (FR)
(72) Inventeur: BAINVEL, Jean-Marc, 46400 Saint Laurent les Tours (FR)
(74) Mandataire: Lavoix
(86) Numéro de dépôt international: PCT/EP2016/077597
(87) Numéro de publication internationale: WO 2017/081321

(56) Documents cités:
- DE-A1-102013 213 806
- FR-A1- 2 703 280
- US-A1- 2011 203 819
- US-A1- 2014 346 744

## Description

Le domaine de l'invention concerne 1 une machine portative polyvalente modulaire. Le document FR 2 703 280 A décrit une telle machine portative comprenant un châssis avec un moteur de rotation et un jeu d'engrenages pour permettre un mouvement d'avance et de recul d'une broche s'étendant selon un axe et destinée à porter un porte outil. Le porte outil porte un outil et est inclus dans le module amovible qui se raccorde au châssis. La broche coopère avec un système de verrouillage à billes pour accrocher le porte outil à la broche. Le verrouillage et le déverrouillage sont obtenus par un mouvement en translation d'un piston.

De nos jours, les différents secteurs industriels cherchent à optimiser les performances des produits développés de manière à respecter différentes contraintes économiques et environnementales. Il en est de même dans le milieu de la construction aéronautique, qui utilise de plus en plus, au sein des avions, des structures composées d'un ou plusieurs matériaux de nature et de caractéristiques différentes, afin de limiter le poids des avions, et donc leur consommation de carburant. Ces divers matériaux peuvent être superposés lors de l'assemblage sous forme de panneaux, par exemple en utilisant un empilage d'alliage d'aluminium associé à de la fibre de carbone, ou à du titane. Ces différents matériaux exigent, afin d'être percés et/ou fraisurés de manière optimale, des paramètres de coupe différents, par exemple en terme de vitesse de rotation de l'outil de coupe, et de vitesse d'avance.

Le respect de ces différents paramètres de coupe permet d'augmenter la durée de vie de l'outil de coupe ou foret, d'améliorer la qualité du perçage réalisé, et de limiter le risque de détérioration des pièces percées. De ce fait, les coûts de réalisation des constructeurs aéronautiques sont limités.

Pour permettre de respecter les différents matériaux à usiner sur un avion, les opérateurs doivent s'équiper de nombreuses machines dédiées avec les outils et les réglages adéquats pour les utiliser dans de nombreuses applications aux caractéristiques variées. En effet, l'utilisation d'une machine avec plusieurs outils est très chronophage car les opérateurs doivent démonter les outils de coupe, remonter les nouveaux et régler les paramètres de la machine pour prendre en compte ce nouvel outil de coupe. Cela engendre une perte de productivité mais également cela peut générer des erreurs de réglages de la machine par rapport aux matériaux à usiner. Dans ces conditions, il est plus avantageux alors d'acheter plusieurs machines et les dédier à des taches particulières. Cette stratégie d'équipement est naturellement très couteuse.

Ces différents réglages sont encore plus complexes pour les machines de perçage portative appelées unité de perçage automatisé, ou UPA, équipées d'une cinématique d'entrainement de la broche entrainée par un moteur dit "de broche" et d'une cinématique d'entrainement de l'avance de la broche par un second moteur dit "moteur d'avance".

Lorsque l'outil de la machine arrive à la fin de sa durée de vie, les machines doivent être acheminées à la maintenance afin de remplacer l'outil, de le régler à nouveau et de faire quelques essais avant de remettre les machines dans le parc utilisable. Cette absence de la machine pénalise la production ou, au mieux, est compensée par l'acquisition d'une machine de remplacement.

Suite à ces différentes observations, les constructeurs de perceuses ont étudié des possibilités pour séparer la machine de perçage en au moins deux sous-ensembles de la machine, afin d'accélérer le remplacement des outils, voire de faciliter le changement d'applications pour une machine donnée. La solution la plus connue à ce jour consiste à garder le sous-ensemble "motoréducteur" comme fixe au sein du poste de travail. Ce qui fait que le reste de la machine, qui comprend le moteur d'avance, le sous-ensemble tête, le sous-ensemble broche et le porte-outil, est à remplacer.

Les solutions proposées ne garantissent pas un remplacement fonctionnel efficace et économiquement avantageux. En effet, pour garantir le bon réglage de l'outil sur la machine de perçage, ces systèmes séparent la machine au niveau du moteur d'avance ce qui n'est économiquement pas beaucoup plus avantageux que d'avoir une machine dédiée.

Un but de l'invention est donc de pallier ces problèmes, c'est-à-dire en particulier de fournir une machine portative polyvalente modulaire, notamment pour réaliser du perçage ou du fraisurage, couvrant une large étendue d'applications grâce à une modularité au niveau de la tête de la machine et garantissant une adéquation entre les outils utilisés et les réglages de cette machine polyvalente portative modulaire.

A cet effet, l'invention concerne une machine portative polyvalente modulaire selon la revendication 1, notamment de perçage ou fraisurage, notamment de pièces composant des structures d'avions, comprenant un châssis comprenant notamment un moteur de rotation d'un outil et un moteur de translation de l'outil et une broche. La broche s'étend selon un axe (D) et destinée à porter un porte outil. Ladite broche est entrainée, par rapport au châssis, en rotation autour de l'axe (D) par le moteur de rotation et en translation selon l'axe (D) par le moteur de translation. Le dit porte-outil est inclus dans un module amovible venant se raccorder au châssis et porte l'outil, notamment de perçage ou fraisurage.

La broche coopère avec un système de verrouillage et de déverrouillage pour accrocher le module amovible au châssis de la machine et le porte-outil à la broche. Le verrouillage et le déverrouillage est obtenu par un mouvement en translation selon l'axe (D) d'au moins une pièce mobile lors de la translation de la broche.

Selon des modes particuliers de réalisation, la machine comprend l'une ou plusieurs des caractéristiques suivantes :
- La au moins une pièce mobile vient en contrainte sur au moins un système à billes lors du verrouillage du système de verrouillage et de déverrouillage.
- Le système de verrouillage et déverrouillage comprend un système à billes destiné à verrouiller l'équipement sur le châssis de la machine et un système à billes destiné à verrouiller le porte-outil sur la broche.
- Le module amovible est équipé d'un moyen d'identification comportant ses caractéristiques techniques et ses données d'usage et la machine comprend un moyen de lecture dudit moyen d'identification à la mise en place du module amovible sur le châssis de la machine.
- Les moyens d'identification et de lecture utilisent une technologie RFID ou une autre technologie sans contact.
- La machine comprend un capteur destiné à détecter la présence du module amovible sur la machine.
- La machine comprend un capteur destiné à détecter si le porte-outil est verrouillé sur la broche.

L'invention concerne aussi un procédé selon la revendication 8 d'accrochage d'un module amovible sur une machine telle que décrite précédemment. Selon le procédé :
- En phase de verrouillage du module amovible sur le châssis de la machine :
   - Le module amovible est positionné manuellement sur le châssis conduisant à ce que le porte-outil soit inséré dans la broche,
   - La broche effectue une translation selon l'axe (D) vers le module amovible entrainant le verrouillage dudit module par le système de verrouillage et de déverrouillage.
- En phase de déverrouillage du module amovible sur le châssis de la machine :
   - La broche effectue une translation selon l'axe (D) vers le châssis entrainant le déverrouillage du module amovible par le système de verrouillage et de déverrouillage.

Selon un mode de mise en œuvre particulier du procédé :
- En phase de verrouillage du module amovible sur le châssis, la broche permet la translation selon l'axe (D) vers le module amovible d'au moins une pièce mobile qui vient pousser les billes d'un système à billes dans des logements du module amovible entrainant le verrouillage du module amovible sur le châssis,
- En phase de déverrouillage, la broche permet la translation selon l'axe (D) vers le châssis de ladite au moins une pièce mobile qui libère les billes du au moins un système à billes des logements du module amovible entrainant le déverrouillage du module amovible sur le châssis.

Selon des modes particuliers de mise en œuvre du procédé suivant l'invention, le procédé comprend l'une ou plusieurs des caractéristiques ; suivantes :
- Une deuxième pièce mobile bloque des billes de verrouillage du système à billes au niveau de l'insertion du porte-outil dans la broche lors de la phase de verrouillage et les libère lors de la phase de déverrouillage.
- Le verrouillage du module amovible ne peut s'effectuer que quand le capteur détecte une mise en place du module amovible sur le châssis de la machine.
- Le verrouillage du porte-outil sur la broche ne peut s'effectuer que quand le capteur détecte la présence du porte-outil sur la broche.
- Des informations, notamment d'identification ou d'usage, sont transmises du module amovible à la machine par des moyens d'identification et de lecture permettant à la machine d'adapter ses réglages de fonctionnement en fonction des caractéristiques du module amovible.

La solution est de réaliser le démontage du porte-outil, au niveau de la tête de la machine et plus précisément de pouvoir démonter automatiquement et facilement le sous-ensemble de la machine portant l'outil. Cette solution permet tout d'abord de démonter un module amovible intégrant le porte-outil, et ensuite de désolidariser le porte-outil de la broche de la machine. La broche est positionnée au niveau de la tête de la machine tout en étant mobile en rotation et en translation par rapport à celle-ci. Au niveau du processus de mise en place de cette solution, ces deux parties sont démontées en même temps.

Afin de limiter les opérations de l'opérateur, le module amovible possède des moyens permettant sa reconnaissance par les moyens de gestion de la machine. En effet, la machine est capable de détecter la présence du module amovible, et de connaitre les caractéristiques du couple porte-outil/outil installé sur ladite machine afin de pouvoir charger dans le programme de gestion de la machine les paramètres de coupe spécifiques de l'outil placé dans l'audit porte-outil.

L'invention permet donc de changer uniquement le module amovible, comprenant le porte-outil et l'outil ; ledit module amovible étant lié à la tête de la machine par un système amovible permettant de le remplacer aisément.

Pour faciliter le remplacement et la configuration de la machine en fonction des outils utilisés, les différents modules amovibles sont équipés d'un moyen d'identification afin de permettre au programme pilotant la machine de reconnaitre le module amovible et son outil, et donc l'application demandée, et de charger les paramètres d'utilisation en conséquence. On peut ainsi détecter par exemple :
- Le type de module amovible et son porte-outil et outil dédiés,
- Le numéro d'identification, durée de vie, nombre de cycles, etc du module amovible.
- La vitesse de rotation et la course de l'outil pour l'opération à réaliser,

En contrepartie, la machine est équipée d'un moyen de lecture du moyen d'identification des modules amovibles. Ce moyen de lecture transmet ensuite les données au programme de pilotage de la machine. Ces moyens d'identification et de lecture utilisent préférentiellement la technologie RFID mais peut également utiliser d'autres technologie sans contact (code barre, QR code) ou avec contact électronique.

Avantageusement, l'invention utilise le moteur d'avance présent dans les machines dites "Full Electric", qui comprennent un moteur électrique d'avance et un moteur électrique de rotation, pour actionner le système de verrouillage et déverrouillage du module amovible sur le châssis de la machine mais également du porte-outil sur la broche. Une position initiale de la broche est définie, position dans laquelle le module amovible et la broche sont verrouillés. A partir de cette position, l'opérateur actionne un bouton poussoir ou un autre actionneur qui provoque un retour arrière de la broche dans la position que nous appellerons position déverrouillée. Cette action déverrouille simultanément le système de verrouillage et de déverrouillage en translation de la broche et du module amovible. Ledit système de verrouillage et de déverrouillage utilisent préférentiellement des systèmes à billes. Le fait d'utiliser le moteur d'avance pour réaliser cette fonction de déverrouillage, apporte un gain de moyen car le moteur qui est déjà installé sur la machine, et est utilisé comme un actionneur puissant et/ou rapide et/ou compact. Par exemple, il est capable de fournir un effort axial de l'ordre de 250 daN avec un temps d'action très court, de l'ordre de 1 seconde.

Pour compléter le contrôle de la sécurité de l'ensemble, la machine est équipée au niveau de la tête de 2 capteurs inductifs :
- Un premier capteur réalise la détection de la présence du module amovible sur la machine permettant de ne déclencher la procédure de verrouillage que si le module amovible est détecté en place.
- Un second capteur sert à indiquer si la broche est en position déverrouillée ou non.

Les caractéristiques et avantages de l'invention apparaîtront à la lecture de la description qui va suivre, donnée uniquement à titre d'exemple, et non limitative, et faite en référence aux dessins annexés :
- La figure 1 est un schéma d'une machine de perçage et de fraisurage avec contrôle de l'avance de la broche selon l'art antérieur.
- La figure 2 est une vue en coupe de la liaison de la tête de la machine avec le module amovible selon un exemple de réalisation de l'invention en position déverrouillée.
- La figure 3 est une vue en coupe de la liaison de la tête de la machine avec le module amovible en position déverrouillée, pour le même exemple de réalisation de l'invention.

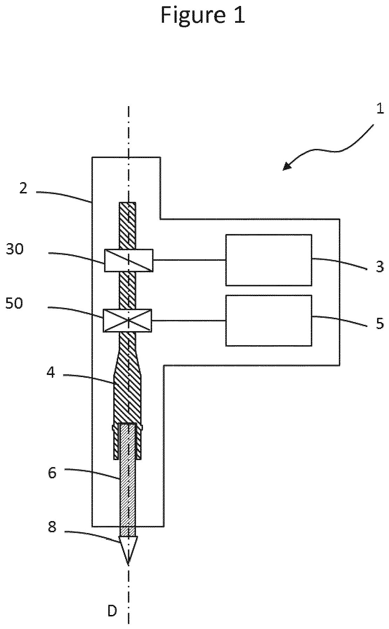

La figure 1 présente un schéma d'une machine 1 de perçage et fraisurage avec contrôle de l'avance selon l'art antérieur. Cette machine 1 comprend un châssis 2 et une broche 4 qui s'étend sur un axe D et porte un porte-outil 6 lui-même portant un outil 8 de coupe ou ayant une autre utilité. Un moteur d'avance 3 est relié à la broche 4 par un dispositif 30 de mise en translation de ladite broche 4 par rapport au châssis 2 selon l'axe D. Un moteur de rotation 5 est relié à la broche 4 par un dispositif 50 de mise en rotation de la broche 4 autour de l'axe D par rapport au châssis 2.

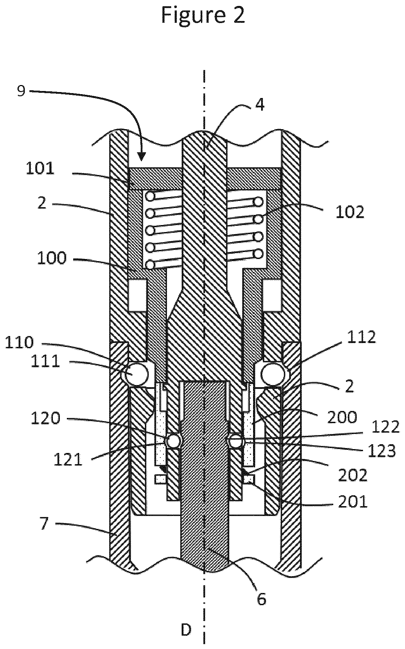

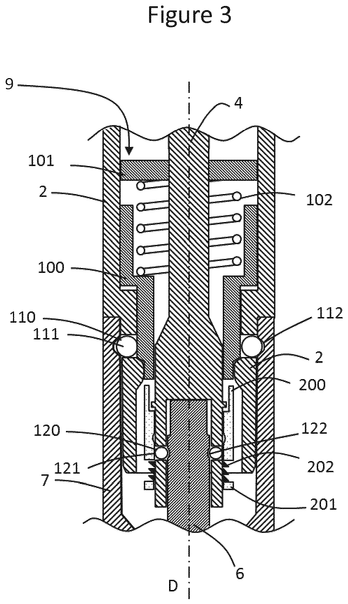

La figure 2 montre une vue en coupe de la liaison entre le module amovible 7 et le châssis 2 de la machine 1 selon une mise en œuvre de l'invention en position déverrouillée. Le châssis 2 intègre la broche 4 et un système 9 de verrouillage et de déverrouillage. Dans l'exemple de réalisation représenté en figures 2 et 3, le système 9 de verrouillage et de déverrouillage est composé de deux sous-ensembles.

Le premier sous-ensemble permet de verrouiller et déverrouiller le module amovible 7 au châssis 2. Ce premier sous-ensemble est composé d'une bague 101, d'un ressort 102 et d'une pièce mobile 100 en translation selon l'axe D. Cette pièce mobile 100 coopère avec un système 110 à billes 111 présent sur le châssis 2. Dans un autre exemple de réalisation, le ressort 102 peut être remplacé par tout autre moyen emmagasinant de l'énergie cinétique destinée à être relâchée, notamment un système à fluide comprimé.

Le deuxième sous-ensemble est disposé sur l'extrémité de la broche 4 et permet de verrouiller et déverrouiller le porte-outil 6 sur la broche 4. Il est composé d'une pièce 200 mobile en translation selon l'axe D, d'un ressort 202 et d'une bague 201 fixe sur la broche. La pièce mobile 200 coopère avec un système 120 à billes 121 présent sur la broche 4.

Dans la position déverrouillée de la figure 2, l'opérateur a actionné le retour de la broche 4 avec le moteur d'avance 3 non représenté au-delà d'une position initiale dans laquelle se trouve le système de verrouillage/déverrouillage lorsque qu'un verrouillage vient d'être réalisé. Idéalement, le retour au-delà de la position initiale se fait avec un bouton de commande différent de celui de qui actionne l'avance classique pour les opérations de coupe pour éviter les déverrouillages intempestifs. La position initiale peut être définie comme étant le moment où le système 9 de verrouillage et de déverrouillage vient d'être verrouillé.

Pour arriver à cette position déverrouillée, la broche 4 entraîne en translation la pièce mobile 200 jusqu'à la mise en contact de ladite pièce mobile 200 sur la pièce mobile 100. La translation de la broche 4 met le ressort 202 en tension par le biais de la bague 201 solidaire de ladite broche 4. Dès lors que la pression exercée par la pièce mobile 200 est supérieure à celle exercée par le ressort 102 maintenu par la bague 101, la pièce mobile 100 est entraîné jusqu'au contact de la bague 101. Dans cet état, les billes 111 du système à billes 110 ne sont pas contraintes vers l'extérieur du châssis 2 par la pièce mobile 100. De plus, la pièce mobile 200 n'exerce pas de contrainte sur le système 120 à billes 121 en raison de la présence d'enfoncements 123 sur cette pièce mobile 200.

En position déverrouillée, les systèmes à billes 110 et 120 ne sont pas actionnés, il suffit de tirer sur le module amovible 7 pour le désolidariser du châssis 2 de la machine 1. De manière simultanée, le porte-outil 6 étant intégré ou lié au module amovible 7, il se détache de la broche 4. L'opérateur peut alors procéder au changement de module 7. Pour cela, il enclenche un autre module amovible 7 et son porte-outil sur le châssis 2 de la machine 1. Avantageusement, au moins un capteur 13 permet de vérifier la présence et le bon positionnement du module amovible 7 sur le châssis 2 etau moins un capteur 16 permet de vérifier la présence et le bon positionnement du porte-outil 6 sur la broche 4. Ces capteurs 13 et 16 peuvent débloquer une éventuelle sécurité permettant de bloquer l'avance de la broche 4 en l'absence du module 7 ou du porte-outil 6. Ensuite l'opérateur peut actionner la descente de la broche 4 vers la position dite initiale qui verrouille le module 7 et le porte-outil 4 sur le châssis 2 et la broche 4.

La figure 3 montre la position verrouillée une fois que la broche est revenue en position initiale. La broche 4 a avancé grâce au moteur d'avance 3 non représenté. Sans la contrainte en pression de la broche 4, le ressort 102 libère l'énergie accumulée en repoussant la pièce mobile 100 vers le système 110 à billes. Les billes 111 dudit système sont repoussées vers l'extérieur et viennent occuper des logements 112 aménagés dans la paroi interne du module amovible 7. Cela a pour effet de verrouiller le module amovible 7 sur le châssis 2 de la machine 1.

Concomitamment, la translation de la broche 4 vers le module amovible 7 libère également la tension sur le ressort 202 qui pousse alors la pièce amovible 200 sur la broche 2 en butée vers le châssis 2. Cela a pour effet de mettre en contrainte les billes 121 du système 120 à billes et de les pousser vers l'intérieur de la broche 4 pour qu'elles se logent dans des logements 122 aménagés dans le porte-outil 6. Ledit porte-outil 6 est alors verrouillé à la broche 4. La pièce 200, le ressort 202 et la bague 201 sont solidaires de la broche 4 ce qui permet de ne pas gêner le contrôle de l'avance et la rotation de la broche 4.

Avantageusement, l'invention propose de palier aux problèmes de réglage des paramètres de la machine lors d'un changement d'outil qui est lui-même facilité par ce principe de modularité au niveau de la tête de la machine. Pour cela, la machine 1 est équipée d'un système d'échange de données composé d'un moyen 14 de lecture (non visible sur les figures) présent sur le châssis 2 de la machine 1 et d'un moyen 15 d'identification (non visible sur les figures) présent sur le module amovible 7. Ces moyens 14 et 15 utilisent préférentiellement la technologie sans contact RFID mais peuvent utiliser une autre technologie sans contact ou avec contact.

Dans un exemple de mise en œuvre de l'invention non limitatif, le moyen 15 d'identification contient notamment les données d'identification de l'outil 8 porté par le porte-outil 6. Des données d'usage dudit outil 8 peuvent également être contenues dans le moyen 15, notamment le nombre de cycles, le temps de vie restant. Ce moyen 15 peut également comporter les caractéristiques de l'outil 8 et les réglages à paramétrer dans la machine 1 pour une bonne utilisation de l'outil 8. Dans un autre exemple de mise en œuvre de l'invention, toutes ces informations peuvent être enregistrées dans un serveur central relié à la machine 1 et seule l'identification du module amovible 7 associé à son outil 8 est contenue sur le moyen 15 d'identification. Cette identification permettra au serveur de récupérer toutes informations liées au module amovible 7 et à son outil 8.

Lors de l'insertion d'un module amovible 7 sur la tête de la machine 1, le moyen 14 de lecture accède aux données contenues sur le moyen d'identification 15. La machine 1, ou un serveur central de pilotage (non représenté), interprète ces données pour effectuer les réglages nécessaires à la bonne utilisation de l'outil 8. Les réglages peuvent par exemple être l'avance de la broche 4, le nombre de rotations par minute, une séquence combinant ces deux paramètres...

## Revendications

1. Machine portative polyvalente modulaire (1), notamment de perçage ou fraisurage, notamment de pièces composant des structures d'avions, comprenant :
- Un châssis (2) comprenant notamment un moteur (5) de rotation d'un outil (8) et un moteur (3) de translation de l'outil et une broche (4),
- La broche s'étendant selon un axe (D) et destinée à porter un porte outil (6),
- La broche (4) étant entrainée, par rapport au châssis, en rotation autour de l'axe (D) par le moteur de rotation (5) et en translation selon l'axe (D) par le moteur de translation (3), et
- Le dit porte outil (6) étant inclus dans un module amovible (7) venant se raccorder au châssis (2) et porte l'outil (8), notamment de perçage ou fraisurage,
telle que la broche (4) coopère avec un système (9) de verrouillage et de déverrouillage pour accrocher le module amovible (7) au châssis (2) de la machine (1) et son porte outil (6) à la broche (4), et telle que le verrouillage et le déverrouillage est obtenu par un mouvement en translation selon l'axe (D) d'au moins une pièce mobile (100) lors de la translation de la broche (4).

2. Machine (1) selon la revendication 1, **caractérisée en ce que** la pièce mobile (100) vient en contrainte sur au moins un système (110) à billes lors du verrouillage du système (9) de verrouillage et de déverrouillage.

3. Machine (1) selon la revendication 2, **caractérisée en ce que** le système (9) de verrouillage et déverrouillage comprend un système (110) à billes destiné à verrouiller l'équipement sur le châssis (2) de la machine (1) et un système (120) à billes destiné à verrouiller le porte outil (6) sur la broche (4).

4. Machine (1) selon l'une quelconque des revendications précédentes, **caractérisée en ce que** le module amovible (7) est équipé d'un moyen d'identification (15) comportant ses caractéristiques techniques et ses données d'usage, et **en ce que** la machine (1) comprend un moyen de lecture (14) dudit moyen d'identification (15) à la mise en place du module amovible (7) sur le châssis (2) de la machine (1).

5. Machine (1) selon la revendication 4, **caractérisée en ce que** les moyens d'identification (15) et de lecture (14) utilisent une technologie RFID ou une autre technologie sans contact.

6. Machine (1) selon l'une quelconque des revendications précédentes, **caractérisée en ce qu'**elle comprend un capteur (13) destiné à détecter la présence du module amovible (7) sur la machine (1).

7. Machine (1) selon l'une quelconque des revendications précédentes, **caractérisée en ce qu'**elle comprend un capteur (16) destiné à détecter si le porte outil (6) est verrouillé sur la broche (4).

8. Procédé d'accrochage d'un module amovible (7) sur une machine (1) telle que décrite par l'une quelconque des revendications précédentes, **caractérisé en ce que** :
. En phase de verrouillage du module amovible (7) sur le châssis (2) de la machine (1) :
. Le module amovible (7) est positionné manuellement sur le châssis (2) conduisant à ce que le porte-outil (6) soit inséré dans la broche (4), et
. La broche (4) effectue une translation selon l'axe (D) vers le module amovible (7) entrainant le verrouillage dudit module par le système de verrouillage et de déverrouillage (9), et
. En phase de déverrouillage du module amovible (7) sur le châssis (2) de la machine (1) :
. La broche (4) effectue une translation selon l'axe (D) vers le châssis (2) entrainant le déverrouillage du module amovible (7) par le système (9) de verrouillage et de déverrouillage.

9. Procédé selon la revendication 8, **caractérisé en ce que** :
. En phase de verrouillage du module amovible (7) sur le châssis (2), la broche (4) permet la translation selon l'axe (D) vers le module amovible (7) d'au moins une pièce mobile (100) qui vient pousser les billes (111) d'un système à billes (110) dans des logements (112) du module amovible (7) entrainant le verrouillage du module amovible (7) sur le châssis (2), et
. En phase de déverrouillage, la broche (4) permet la translation selon l'axe (D) vers le châssis (2) de ladite au moins une pièce mobile (100) qui libère les billes (111) du au moins un système à billes (110) des logements (112) du module amovible (7) entrainant le déverrouillage du module amovible (7) sur le châssis (2).

10. Procédé selon la revendication 8, **caractérisé en ce qu'**une deuxième pièce mobile (200) bloque des billes (121) de verrouillage du système à billes (120) au niveau de l'insertion du porte-outil (6) dans la broche (4) lors de la phase de verrouillage et les libère lors de la phase de déverrouillage.

11. Procédé selon l'une quelconque des revendications 8 à 10, **caractérisé en ce que** le verrouillage du module amovible (7) ne peut s'effectuer que quand le capteur (13) détecte une mise en place du module amovible (7) sur le châssis (2) de la machine (1).

12. Procédé selon l'une quelconque des revendications 8 à 11, **caractérisé en ce que** le verrouillage du porte-outil (6) sur la broche (4) ne peut s'effectuer que quand le capteur (16) détecte la présence du porte-outil (6) sur la broche (4).

13. Procédé selon l'une quelconque des revendications 8 à 12, **caractérisé en ce que** des informations, notamment d'identification ou d'usage, sont transmises du module amovible (7) à la machine (1) par des moyens d'identification (15) et de lecture (14) permettant à la machine (1) d'adapter ses réglages de fonctionnement en fonction des caractéristiques du module amovible (7).

## Patentansprüche

1. Modulare tragbare Mehrzweckmaschine (1), insbesondere zum Bohren oder Fräsen, insbesondere von Teilen, welche Flugzeugstrukturen bilden, aufweisend:
- einen Rahmen (2), welcher insbesondere einen Motor (5) zum Drehen eines Werkzeugs (8) und einen Motor (3) zur Translation des Werkzeugs und eine Spindel (4) aufweist,
- wobei sich die Spindel entlang einer Achse (D) erstreckt und dazu bestimmt ist, einen Werkzeughalter (6) zu halten,
- wobei die Spindel (4) bezüglich des Rahmens mittels des Motors zum Drehen (5) um die Achse (D) herum dreh- und mittels des Motors zur Translation (3) entlang der Achse (D) translationsangetrieben wird, und
- wobei der besagte Werkzeughalter (6) in einem abnehmbaren Modul (7) enthalten ist, welches sich mit dem Rahmen (2) verbindet, und das Werkzeug (8) hält, insbesondere zum Bohren oder Fräsen, sodass die Spindel (4) mit einem System (9) zum Verriegeln und zum Entriegeln kooperiert, um das abnehmbare Modul (7) am Rahmen (2) der Maschine (1) und seinen Werkzeughalter (6) an der Spindel (4) zu befestigen, und sodass das Verriegeln und das Entriegeln mittels einer Translationsbewegung entlang der Achse (D) von zumindest einem beweglichen Teil (100) während der Translation der Spindel (4) erreicht wird.

2. Maschine (1) gemäß Anspruch 1, **dadurch gekennzeichnet, dass** das bewegliche Teil (100) in Zwängung an zumindest einem Kugeln-System (110) gerät beim Verriegeln des Systems (9) zum Verriegeln und zum Entriegeln.

3. Maschine (1) gemäß Anspruch 2, **dadurch gekennzeichnet, dass** das System (9) zum Verriegeln und Entriegeln aufweist ein Kugeln-System (110), welches dazu bestimmt ist, die Ausrüstung am Rahmen (2) der Maschine (1) zu verriegeln, und ein Kugeln-System (120), welches dazu bestimmt ist, den Werkzeughalter (6) an der Spindel (4) zu verriegeln.

4. Maschine (1) gemäß irgendeinem der vorherigen Ansprüche, **dadurch gekennzeichnet, dass** das abnehmbare Modul (7) mit einem Mittel zur Identifikation (15) ausgestattet ist, welches seine technischen Eigenschaften und seine Verwendungsdaten aufweist, und dadurch, dass die Maschine (1) ein Mittel zum Lesen (14) des besagten Mittels zur Identifikation (15) bei der Anordnung des abnehmbaren Moduls (7) am Rahmen (2) der Maschine (1) aufweist.

5. Maschine (1) gemäß Anspruch 4, **dadurch gekennzeichnet, dass** die Mittel zur Identifikation (15) und zum Lesen (14) eine RFID-Technologie oder eine andere kontaktlose Technologie verwenden.

6. Maschine (1) gemäß irgendeinem der vorherigen Ansprüche, **dadurch gekennzeichnet, dass** sie einen Sensor (13) aufweist, welcher dazu bestimmt ist, das Vorhandensein des abnehmbaren Moduls (7) an der Maschine (1) zu detektieren.

7. Maschine (1) gemäß irgendeinem der vorherigen Ansprüche, **dadurch gekennzeichnet, dass** sie einen Sensor (16) aufweist, welcher dazu bestimmt ist, zu detektieren, ob der Werkzeughalter (6) an der Spindel (4) verriegelt ist.

8. Verfahren zum Befestigen eines abnehmbaren Moduls (7) an einer Maschine (1), welche von irgendeinem der vorherigen Ansprüche beschrieben wird, **dadurch gekennzeichnet, dass**:
- in der Phase des Verriegelns des abnehmbaren Moduls (7) am Rahmen (2) der Maschine (1):
- das abnehmbare Modul (7) manuell am Rahmen (2) angeordnet wird, was dazu führt, dass der Werkzeughalter (6) in die Spindel (4) eingeführt wird, und
- die Spindel (4) eine Translation entlang der Achse (D) zum abnehmbaren Modul (7) hin durchführt, was die Verriegelung des besagten Moduls mittels des Systems zum Verriegeln und zum Entriegeln (9) bewirkt, und
- in der Phase des Entriegelns des abnehmbaren Moduls (7) vom Rahmen (2) der Maschine (1):
- die Spindel (4) eine Translation entlang der Achse (D) zum Rahmen (2) hin durchführt, was die Entriegelung des abnehmbaren Moduls (7) mittels des Systems (9) zum Verriegeln und zum Entriegeln bewirkt.

9. Verfahren gemäß Anspruch 8, **dadurch gekennzeichnet, dass**:
- in der Phase des Verriegelns des abnehmbaren Moduls (7) am Rahmen (2) die Spindel (4) die Translation von zumindest einem beweglichen Teil (100) entlang der Achse (D) zum abnehmbaren Modul (7) hin erlaubt, welches die Kugeln (111) eines Kugeln-Systems (110) in die Aufnahmen (112) des abnehmbaren Moduls (7) drückt, was die Verriegelung des abnehmbaren Moduls (7) am Rahmen (2) bewirkt, und
- in der Phase des Entriegelns die Spindel (4) die Translation des besagten zumindest einen beweglichen Teils (100) entlang der Achse (D) zum Rahmen (2) hin erlaubt, welches die Kugeln (111) des zumindest einen Kugeln-Systems (110) aus den Aufnahmen (112) des abnehmbaren Moduls freigibt, was die Entriegelung des abnehmbaren Moduls (7) vom Rahmen (2) bewirkt.

10. Verfahren gemäß Anspruch 8, **dadurch gekennzeichnet, dass** ein zweites bewegliches Teil (200) die Kugeln (121) zum Verriegeln des Kugeln-Systems (120) auf dem Niveau des Einführens des Werkzeughalters (6) in die Spindel (4) während der Phase des Verriegelns blockiert und sie während der Phase des Entriegelns freigibt.

11. Verfahren gemäß irgendeinem der Ansprüche 8 bis 10, **dadurch gekennzeichnet, dass** das Verriegeln des abnehmbaren Moduls (7) nur erfolgen kann, wenn der Sensor (13) eine Anordnung des abnehmbaren Moduls (7) am Rahmen (2) der Maschine (1) detektiert.

12. Verfahren gemäß irgendeinem der Ansprüche 8 bis 11, **dadurch gekennzeichnet, dass** das Verriegeln des Werkzeughalters (6) an der Spindel (4) nur erfolgen kann, wenn der Sensor (16) das Vorhandensein des Werkzeughalters (6) an der Spindel (4) detektiert.

13. Verfahren gemäß irgendeinem der Ansprüche 8 bis 12, **dadurch gekennzeichnet, dass** Informationen, insbesondere zur Identifikation oder zur Verwendung, vom abnehmbaren Modul (7) zur Maschine (1) mittels Mitteln zur Identifikation (15) und zum Lesen (14) übertragen werden, welche es der Maschine (1) erlauben, ihre Betriebseinstellungen in Abhängigkeit von Eigenschaften des abnehmbaren Moduls (7) anzupassen.

## Claims

1. Portable, modular, multipurpose machine (1), in particular for drilling or countersinking, in particular of parts making up aeroplane structures, comprising:
- a chassis (2) comprising in particular a motor (5) for rotation of a tool (8) and a motor (3) for translation of the tool and a spindle (4),
- the spindle (4) extending according to an axis (D) and intended to carry a tool holder (6),
- the spindle (4) being driven, relative to the chassis, in rotation about the axis (D) by the motor for rotation (5) and in translation according to the axis (D) by the motor for translation (3), and
- said tool holder (6) being included in a removable module (7) which comes to be connected to the chassis (2) and tool holder (8), in particular for drilling or countersinking,
such that the spindle (4) cooperates with a locking and unlocking system (9) in order to attach the removable module (7) to the chassis (2) of the machine (1) and the tool holder (6) thereof to the spindle (4), and such that locking and unlocking is obtained by a movement in translation according to the axis (D) of at least one movable part (100) during translation of the spindle (4).

2. Machine (1) according to claim 1, **characterised in that** the movable part (100) comes to be constrained on at least one ball system (110) during locking of the locking and unlocking system (9).

3. Machine (1) according to claim 2, **characterised in that** the locking and unlocking system (9) comprises a ball system (110) intended to lock the equipment on the chassis (2) of the machine (1) and a ball system (120) intended to lock the tool holder (6) on the spindle (4).

4. Machine (1) according to any of the preceding claims, **characterised in that** the movable module (7) is equipped with an identification means (15) comprising the technical characteristics and usage data thereof, and **in that** the machine (1) includes read-out means (14) of said identification means (15) relating to positioning of the removable module (7) on the chassis (2) of the machine (1).

5. Machine (1) according to claim 4, **characterised in that** the identification (15) and read-out (14) means use RFID technology or another contact-free technology.

6. Machine (1) according to any of the preceding claims, **characterised in that** it includes a sensor (13) intended to detect the presence of the removable module (7) on the machine (1).

7. Machine (1) according to any of the preceding claims, **characterised in that** it includes a sensor (16) intended to detect if the tool holder (6) is locked on the spindle (4).

8. Method of attaching a removable module (7) on a machine (1) such as described by any of the preceding claims, **characterised in that**:
- in the phase of locking of the removable module (7) on the chassis (2) of the machine (1):
- the removable module (7) is positioned manually on the chassis (2) leading to the tool holder (6) being inserted into the spindle (4), and
- the spindle (4) effects a translation according to the axis (D) towards the removable module (7) causing locking of said module by the locking and unlocking system (9), and
- in the phase of unlocking of the removable module (7) on the chassis (2) of the machine (1):
- the spindle (4) effects a translation according to the axis (D) towards the chassis (2) causing unlocking of the removable module (7) by the locking and unlocking system (9).

9. Method according to claim 8, **characterised in that**:
- in the phase of locking of the removable module (7) on the chassis (2), the spindle (4) allows translation according to the axis (D) towards the removable module (7) of at least one movable part (100) which comes to push the balls (111) of a ball system (110) into the housings (112) of the removable module (7) causing locking of the removable module (7) on the chassis (2), and
- in the phase of unlocking, the spindle (4) allows translation according to the axis (D) towards the chassis (2) of said at least one moveable part (100) which frees the balls (111) of at least one ball system (110) from the housings (112) of the removable module (7), causing unlocking of the removable module (7) on the chassis (2).

10. Method according to claim 8, **characterised in that** a second movable part (200) blocks the balls (121) for locking the ball system (120) at the level of the insertion of the tool holder (6) into the spindle (4) during the locking phase and frees them during the unlocking phase.

11. Method according to any of claims 8 to 10, **characterised in that** locking of the removable module (7) can only be effected when the sensor (13) detects a positioning of the removable module (7) on the chassis (2) of the machine (1).

12. Method according to any of claims 8 to 11, **characterised in that** locking of the tool holder (6) on the spindle (4) can only be effected when the sensor (16) detects the presence of the tool holder (6) on the spindle (4).

13. Method according to any of claims 8 to 12, **characterised in that** information, in particular identification or usage, are transmitted from the removable module (7) to the machine (1) by identification (15) and read-out (14) means, allowing the machine (1) to adapt the control functions thereof as a function of the characteristics of the removable module (7).
